# FASCICULE DE BREVET EUROPEEN

(11) **EP 3 131 762 B1**
(45) Date de publication et mention de la délivrance du brevet: **12.06.2019**
(21) Numéro de dépôt: 15716810.5
(22) Date de dépôt: 17.04.2015
(51) Int. Cl.: B60C 9/26, B60C 9/20

(54) **ARMATURE DE SOMMET DE PNEUMATIQUE POUR AVION**
GÜRTELVERSTÄRKUNG FÜR EINEN FLUGZEUGREIFEN
CROWN REINFORCEMENT FOR AN AIRPLANE TYRE

(30) Priorité: 18.04.2014 FR 1453525
(43) Date de publication de la demande: 22.02.2017
(73) Titulaire: Compagnie Générale des Etablissements Michelin, 63000 Clermont-Ferrand (FR)
(72) Inventeur: ESTENNE, Vincent, F-63040 Clermont Ferrand Cedex 9 (FR); JOULIN, Emmanuel, F-63040 Clermont Ferrand Cedex 9 (FR)
(74) Mandataire: Millanvois, Patrick Jacques Jean
(86) Numéro de dépôt international: PCT/EP2015/058344
(87) Numéro de publication internationale: WO 2015/158872

(56) Documents cités:
- EP-A1- 2 499 006
- EP-A2- 2 420 396

## Description

La présente invention concerne un pneumatique pour avion et, en particulier, une armature de sommet de pneumatique pour avion.

Dans ce qui suit, les directions circonférentielle, axiale et radiale désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur, respectivement radialement extérieur», on entend «plus proche, respectivement plus éloigné de l'axe de rotation du pneumatique». Par «axialement intérieur, respectivement axialement extérieur», on entend «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

De façon générale, un pneumatique comprend une bande de roulement, destinée à venir en contact avec un sol par l'intermédiaire d'une surface de roulement, la bande de roulement étant reliée par deux flancs à deux bourrelets, les deux bourrelets étant destinés à assurer une liaison mécanique du pneumatique avec une jante sur laquelle le pneumatique est monté.

Un pneumatique radial pour avion comprend plus particulièrement une armature de carcasse radiale et une armature de sommet, telles que décrites, par exemple, dans le document EP 1381525.

L'armature de carcasse radiale est la structure de renforcement du pneumatique reliant les deux bourrelets du pneumatique. L'armature de carcasse radiale d'un pneumatique pour avion comprend généralement au moins une couche de carcasse, chaque couche de carcasse étant constituée de renforts le plus souvent textiles, enrobés dans un matériau polymérique de type élastomère ou mélange élastomérique, parallèles entre eux et formant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche de sommet, chaque couche de sommet étant constituée de renforts parallèles entre eux et enrobés dans un matériau polymérique de type élastomère ou mélange élastomérique. Parmi les couches de sommet, on distingue usuellement les couches de travail, composant l'armature de travail et constituées le plus souvent de renforts textiles, et les couches de protection, composant l'armature de protection, constituées de renforts métalliques ou textiles, et disposées radialement à l'extérieur de l'armature de travail. L'armature de travail conditionne le comportement mécanique global de l'armature de sommet, alors que l'armature de protection protège essentiellement les couches de travail des agressions susceptibles de se propager à travers la bande de roulement radialement vers l'intérieur du pneumatique.

Les renforts textiles des couches de carcasse et des couches de sommet sont le plus souvent des câbles constitués de filés de filaments textiles, préférentiellement en polyamide aliphatique ou en polyamide aromatique. Les propriétés mécaniques en extension, telles que le module d'élasticité, l'allongement à rupture et la force à rupture des renforts textiles, sont mesurées après un conditionnement préalable. Par "conditionnement préalable", on entend le stockage des renforts textiles pendant au moins 24 heures, avant mesure, dans une atmosphère standard selon la norme européenne DIN EN 20139 (température de 20 ± 2°C, hygrométrie de 65 ± 2%). Les mesures sont réalisées de manière connue à l'aide d'une machine de traction ZWICK GmbH & Co (Allemagne) de type 1435 ou de type 1445. Les renforts textiles subissent une traction sur une longueur initiale de 400 mm à une vitesse nominale de 200 mm/min. Tous les résultats sont une moyenne de 10 mesures.

Lors de la fabrication d'un pneumatique pour avion, et plus précisément lors de l'étape de pose de l'armature de travail, une couche de travail est le plus souvent obtenue par un enroulement circonférentiel en zigzag ou par un enroulement circonférentiel en spires d'une bandelette, sur une surface cylindrique de pose ayant pour axe de révolution l'axe de rotation du pneumatique. La bandelette est généralement constituée d'au moins un renfort textile continu enrobé dans un mélange élastomérique et, le plus souvent, d'une juxtaposition de renforts textiles continus, enrobés dans un mélange élastomérique et parallèles entre eux. Qu'elle soit réalisée par un enroulement circonférentiel en zigzag ou un enroulement circonférentiel en spires, la couche de travail est alors constituée par la juxtaposition de portions de bandelette. L'avantage d'avoir un enroulement circonférentiel en zigzag ou un enroulement circonférentiel en spires est d'éviter, au niveau des extrémités axiales des couches de travail, la présence d'extrémités de renforts libres, susceptibles de générer des fissures dans ces zones et, par conséquent, de diminuer l'endurance de l'armature de travail et la durée de vie du pneumatique.

Par enroulement circonférentiel en spires d'une bandelette, on entend un enroulement de la bandelette, selon la direction circonférentielle, et selon une hélice ayant un rayon égal au rayon de la surface cylindrique de pose et un angle moyen, par rapport à la direction circonférentielle, compris entre 0° et 5°. La couche de travail ainsi obtenue par un enroulement en spires est dite circonférentielle, car l'angle des renforts textiles deux à deux parallèles de la bandelette, formé dans le plan équatorial avec la direction circonférentielle, est compris entre 0° et 5°.

Par enroulement circonférentiel en zigzag d'une bandelette, on entend un enroulement de la bandelette, selon la direction circonférentielle, et selon une courbe périodique, c'est-à-dire une courbe formée d'ondulations périodiques oscillant entre des extrema. Enrouler une bandelette selon une courbe périodique signifie que la ligne moyenne de la bandelette, équidistante des bords de la bandelette, coïncide avec la courbe périodique. Dans le cas d'un enroulement circonférentiel en zigzag, la ligne moyenne de la bandelette forme, avec la direction circonférentielle du pneumatique et dans le plan équatorial du pneumatique, un angle au moins égal à 8° et au plus égal à 30°. En d'autres termes, les renforts constitutifs de chaque couche de travail forment, avec la direction circonférentielle du pneumatique et dans le plan équatorial du pneumatique, un angle au moins égal à 8° et au plus égal à 30°. Lors d'un enroulement circonférentiel en zigzag d'une bandelette, les couches de travail sont posées par paire, chaque paire de couches de travail constituant un binappe de travail. Ainsi un binappe de travail est constitué, en zone courante, c'est-à-dire en dehors de ses extrémités axiales, par deux couches de travail radialement superposées. Au niveau de ses extrémités axiales, un binappe de travail comprend généralement plus de deux couches de travail radialement superposées. On appelle surépaisseur d'extrémité axiale le nombre de couches de travail supplémentaires, selon la direction radiale, par rapport aux deux couches de travail de la zone courante du binappe de travail. Cette surépaisseur d'extrémité axiale est générée par les croisements de la bandelette, en extrémité de binappe de travail, à chaque tour d'enroulement en zigzag. Une telle armature de travail comprenant des binappes de travail obtenus par un enroulement circonférentiel en zigzag d'une bandelette a été décrite dans les documents EP 0240303, EP 0850787, EP 1163120 et EP 1518666.

Il est connu que les surépaisseurs d'extrémités axiales des binappes de travail, et, en particulier, celles du binappe de travail ayant la plus grande largeur axiale, sont sensibles à l'apparition de dommages d'endurance, telles que des fissures pouvant évoluer vers une dégradation significative de l'armature de travail et, le cas échéant, entraîner une réduction de la durée de vie du pneumatique.

En effet, dans les surépaisseurs d'extrémités axiales et à leur voisinage, les sollicitations thermomécaniques sont très élevées, lors de l'écrasement et du roulage du pneumatique, dans les conditions d'usage d'un avion. Par exemple et de façon non limitative, un pneumatique d'avion de ligne peut être soumis à une pression nominale supérieure à 15 bars, une charge nominale supérieure à 20 tonnes et une vitesse maximale de 360 km/h. Il en résulte une dissipation thermique importante et donc un niveau de température élevé susceptible de limiter la performance du pneumatique en endurance.

La performance en endurance d'un pneumatique pour avion est généralement mesurée sur un test de qualification élémentaire, tel que le test TSO (Technical Standard Order) imposé par une norme FAA (Federal Aviation Administration).

Le test TSO est un test réalisé sur volant qui se décompose en 4 phases:
- 50 cycles de décollage de l'avion, dans lesquels le pneumatique est soumis à la pression nominale Pᵥ et à une charge variant entre la charge nominale Zₙ et 0.
- 8 cycles de roulage taxi de l'avion, dans lesquels le pneumatique est soumis à la pression nominale Pᵥ, à la charge nominale Zₙ et à une vitesse d'environ 65 km/h pendant environ 10700 m.
- 2 cycles de roulage taxi de l'avion, dans lesquels le pneumatique est soumis à la pression nominale Pᵥ, à 1,2 fois la charge nominale Zₙ et à une vitesse d'environ 65 km/h pendant environ 10700 m.
- 1 cycle de décollage de l'avion surchargé dans lequel le pneumatique est soumis à la pression nominale Pᵥ et à une charge variant entre 1,5 fois la charge nominale Zₙ et 0.

L'objectif du test TSO est de réaliser tous les cycles sans dommage pour le pneumatique, le déchapage du pneumatique, c'est-à-dire la perte de la bande de roulement, étant toutefois permis au cours du dernier cycle, mais pas la perte de pression.

Il existe des solutions connues de l'homme du métier pour réduire la température au niveau des extrémités axiales de l'armature de travail, chacune d'elles pouvant présenter des inconvénients :
- utilisation d'un mélange élastomérique à basse hystérèse pour la bande de roulement, ce type de mélange étant le plus souvent sensible à l'abrasion et donc susceptible d'accélérer l'usure de la bande de roulement;
- utilisation d'un mélange élastomérique à basse hystérèse pour un premier composant intermédiaire, axialement intérieur à la bande de roulement et axialement extérieur à l'armature de protection, mais avec un risque de décohésion entre ledit premier composant intermédiaire et la bande de roulement, dans des conditions d'utilisation sévères, en particulier lors du test TSO;
- optimisation du profil géométrique d'un deuxième composant intermédiaire, axialement intérieur à l'armature de protection et axialement extérieur à l'armature de travail, mais pouvant entraîner une apparition prématurée dudit deuxième composant intermédiaire à la surface de la bande de roulement, lors de l'usure de la bande de roulement, d'où un risque d'usure accélérée de la bande de roulement ;
- utilisation de renforts circonférentiels pour les couches de travail, c'est-à-dire de renforts formant un angle nul avec la direction circonférentielle, ce qui peut entraîner une baisse de rigidité de dérive du pneumatique et une moins bonne maîtrise de son profil gonflé centrifugé.

Le document EP 2 499 006 B1 montre un pneu pour avion selon le préambule de la revendication 1.

Les inventeurs se sont donnés pour objectif d'améliorer l'endurance de l'armature de travail d'un pneumatique pour avion, en diminuant les sollicitations thermomécaniques au niveau des surépaisseurs d'extrémités axiales des binappes de travail, constitutifs de l'armature de travail.

Cet objectif a été atteint, selon l'invention, par un pneumatique pour avion selon la revendication 1.

Selon l'invention, l'extrémité axiale du binappe de travail le plus radialement intérieur, c'est-à-dire le point le plus axialement extérieur, et le point du binappe de travail le plus radialement intérieur, positionné axialement à l'intérieur de ladite extrémité axiale à une distance L égale à 25 mm, sont positionnés radialement à l'extérieur de la couche de carcasse la plus radialement extérieure à des distances respectives D et D' au moins égales à des valeurs minimales. La distance D entre l'extrémité axiale du binappe de travail le plus radialement intérieur et sa projection orthogonale sur la couche de carcasse la plus radialement extérieure est au moins égale à 8 mm. La distance D' entre le point du binappe de travail le plus radialement intérieur, axialement intérieur à l'extrémité axiale à une distance L égale à 25 mm, et sa projection orthogonale sur la couche de carcasse la plus radialement extérieure est d'une part au plus égale à la distance D et, d'autre part, telle que l'angle A est au moins égal à 12°. L'angle A est l'angle formé par la droite passant par l'extrémité axiale du binappe et par le point du binappe, positionné à 25 mm axialement à l'intérieur, et la droite passant par leurs projections orthogonales respectives sur la couche de carcasse radialement la plus extérieure.

Ces distances minimales, supérieures à celles généralement constatées sur un pneumatique de l'état de la technique, permettent d'obtenir un profil géométrique de l'extrémité du binappe de travail le plus radialement intérieur plus éloigné de l'armature de carcasse que pour un pneumatique de l'état de la technique. Ce profil géométrique, relevé au niveau de l'extrémité axiale, permet de réduire les sollicitations thermomécaniques cycliques en extrémité axiale de binappe, et, par conséquent, la température dans cette zone : ce qui permet d'améliorer l'endurance de l'armature de travail et d'augmenter la durée de vie du pneumatique.

La distance D entre une extrémité axiale du binappe de travail le plus radialement intérieur et sa projection orthogonale sur la couche de carcasse la plus radialement extérieure est avantageusement au plus égale à 16 mm. Cette valeur maximale réduit le risque d'apparition de l'extrémité axiale du binappe de travail, à la surface du pneumatique, en cas d'usure de la portion d'extrémité axiale, ou épaule, de la bande de roulement.

La distance D' entre le point du binappe de travail le plus radialement intérieur, axialement intérieur à l'extrémité axiale à une distance L égale à 25 mm, et sa projection orthogonale sur la couche de carcasse la plus radialement extérieure est avantageusement telle que l'angle A, formé par la droite passant par l'extrémité axiale du binappe et par le point du binappe, positionné à 25 mm axialement à l'intérieur, et la droite passant par leurs projections orthogonales respectives sur la couche de carcasse radialement la plus extérieure, est encore plus avantageusement au moins égal à 15°. Un angle A plus élevé, donc un profil géométrique d'extrémité axiale encore plus relevé, permet une diminution encore plus significative des sollicitations thermomécaniques cycliques en extrémité axiale de binappe et donc de la température dans cette zone.

La distance D' entre le point du binappe de travail le plus radialement intérieur, axialement intérieur à l'extrémité axiale à une distance L égale à 25 mm, et sa projection orthogonale sur la couche de carcasse la plus radialement extérieure est avantageusement telle que l'angle A, formé par la droite passant par l'extrémité axiale du binappe et par le point du binappe, positionné à 25 mm axialement à l'intérieur, et la droite passant par leurs projections orthogonales respectives sur la couche de carcasse radialement la plus extérieure, est avantageusement au plus égal à 30°. Cette valeur maximale réduit également le risque d'apparition de l'extrémité axiale du binappe de travail en cas d'usure de la portion d'extrémité axiale, ou épaule, de la bande de roulement.

Les renforts des couches de travail de tout binappe de travail sont préférentiellement constitués d'un matériau textile. Le textile garantit un bon compromis entre la masse et la résistance à rupture des renforts. L'utilisation de renforts textile pour tout binappe de travail, c'est-à-dire pour toutes les couches de travail, permet une contribution significative à la minimisation de la masse du pneumatique, et donc au gain en charge utile de l'avion. Parmi les renforts textile couramment utilisés dans les pneumatiques pour avion, on distingue les renforts constitués par un polyamide aliphatique, tel que le nylon, et les renforts constitués d'un polyamide aromatique, tel que l'aramide. Les renforts en polyamide aromatique présentent un compromis entre la masse et la résistance à rupture meilleur que celui des renforts en polyamide aliphatique.

Selon un mode de réalisation préféré, les renforts des couches de travail d'au moins le binappe de travail le plus radialement intérieur sont avantageusement des renforts hybrides, constitués d'une combinaison d'un polyamide aliphatique et d'un polyamide aromatique. Le binappe le plus radialement intérieur ayant la largeur axiale la plus large a les extrémités axiales les plus mécaniquement sollicitées, d'où l'intérêt d'utiliser, pour les couches de travail de ce binappe de travail, des renforts hybrides qui présentent à la fois les avantages d'un polyamide aliphatique et ceux d'un polyamide aromatique : résistance à rupture élevée, déformabilité en traction élevée et masse faible.

Selon un autre mode de réalisation préféré, le pneumatique comprend une armature de frettage, comprenant au moins une couche de frettage comprenant des renforts, enrobés dans un matériau élastomérique, formant, avec la direction circonférentielle du pneumatique, un angle au plus égal à 5°, au moins une couche de frettage étant radialement intérieure au binappe de travail le plus radialement intérieur et ayant une largeur axiale au plus égale à 0.8 fois la largeur axiale du binappe de travail le plus radialement intérieur. L'armature de frettage est une armature de renforcement centrée sur le plan équatorial du pneumatique et constituée d'au moins une couche de frettage comprenant des renforts, enrobés dans un matériau élastomérique. Les renforts, le plus souvent textiles, forment, avec la direction circonférentielle du pneumatique, un angle au plus égal à 5°, c'est-à-dire sont sensiblement circonférentiels. La largeur axiale de l'armature de frettage, définie par la largeur axiale de la couche de frettage axialement la plus large, est au plus égale à 0.8 fois la largeur axiale du binappe de travail le plus radialement intérieur, c'est-à-dire à une largeur axiale limitée par rapport à celle de l'armature de travail. Enfin, le plus souvent mais pas exclusivement, une couche de frettage est radialement intérieure au binappe de travail le plus radialement intérieur. Une couche de frettage peut être également radialement extérieure à l'armature de travail, c'est-à-dire à toute couche de travail, ou radialement intercalée entre deux couches de travail consécutives. Une armature de frettage, telle que précédemment décrite, garantit une rigidité circonférentielle élevée dans la portion équatoriale du pneumatique, et, par conséquent, un bonne maîtrise des déformations radiales du pneumatique dues à la centrifugation.

Le pneumatique comprend usuellement une armature de protection comprenant au moins une couche de protection, radialement extérieure à l'armature de travail et dont la fonction est de protéger l'armature de travail contre les agressions mécaniques de la bande de roulement.

Au moins une couche de protection comprend préférentiellement des renforts métalliques, enrobés dans un matériau élastomérique. L'intérêt d'avoir des renforts métalliques, au lieu de renforts textile comme dans les couches de travail, est de garantir une protection efficace de l'armature de travail contre les FOD (Foreign Object Damage). Ces renforts sont généralement ondulés selon la direction circonférentielle.

Les caractéristiques et autres avantages de l'invention seront mieux compris à l'aide des figures 1 à 5 suivantes, non représentées à l'échelle :
- Figure 1 : demi-vue en coupe du sommet d'un pneumatique pour avion de l'état de la technique, dans un plan radial (YZ) passant par l'axe de rotation (YY') du pneumatique.
- Figure 2 : demi-vue en coupe du sommet d'un pneumatique pour avion selon l'invention, dans un plan radial (YZ) passant par l'axe de rotation (YY') du pneumatique.
- Figure 3 : vue détaillée en coupe de l'extrémité axiale de l'armature de travail d'un pneumatique pour avion selon l'invention, dans un plan radial (YZ) passant par l'axe de rotation (YY') du pneumatique.
- Figure 4 : vue en perspective d'une bandelette, constitutive d'un binappe de travail d'un pneumatique pour avion, enroulée circonférentiellement en zigzag, selon une courbe périodique, sur une surface cylindrique de pose.
- Figure 5 : vue développée d'une bandelette, constitutive d'un binappe de travail d'un pneumatique pour avion, enroulée circonférentiellement en zigzag, selon une courbe périodique, après la pose d'une période.

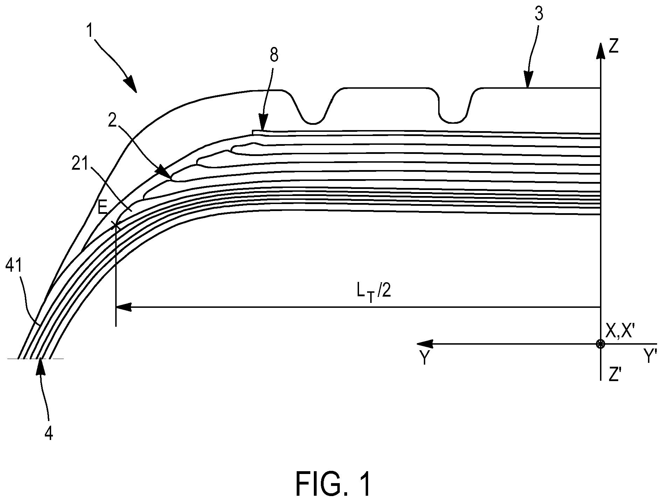

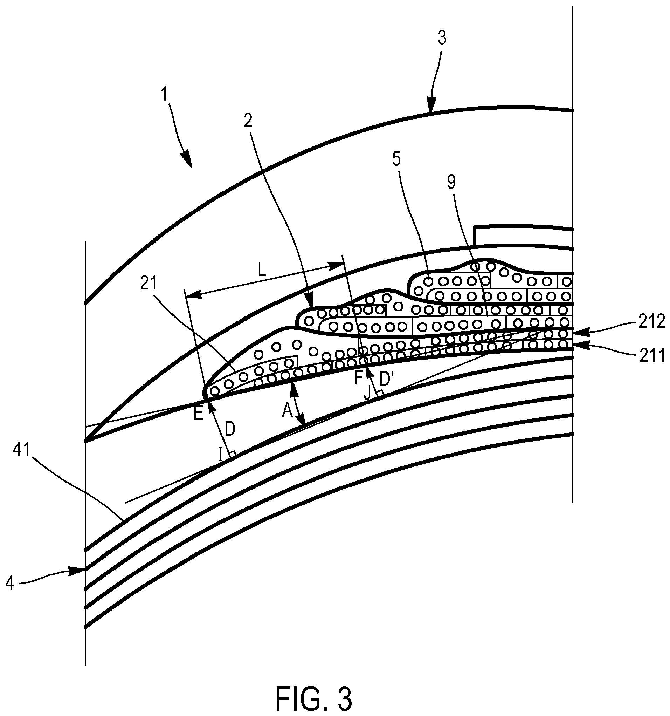

La figure 1 représente, dans un plan radial YZ passant par l'axe de rotation YY' du pneumatique, une demi-vue en coupe du sommet d'un pneumatique 1 pour avion de l'état de la technique, comprenant une armature de travail 2 radialement intérieure à une bande de roulement 3 et radialement extérieure à une armature de carcasse 4. Dans l'exemple présenté, l'armature de travail 2 comprend cinq binappes de travail 21, le binappe de travail le plus radialement intérieur ayant la plus grande largeur axiale L_{T}, mesurée entre ses deux extrémités axiales. Sur la figure 1, seule une demi-largeur L_{T}/2, entre une extrémité axiale E du binappe de travail 21 le plus radialement intérieur et le plan équatorial XZ, est représentée. Chaque binappe de travail 21 est constitué au moins en partie de deux couches de travail (211, 212) radialement superposées (voir sur la figure 3). Chaque couche de travail (211, 212) comprend des renforts textile de type polyamide aliphatique, enrobés dans un matériau élastomérique. L'armature de carcasse 4 comprend une superposition de couches de carcasse 41. Chaque couche de carcasse 41 comprend des renforts textile de type polyamide aliphatique, enrobés dans un matériau élastomérique, et formant, avec la direction circonférentielle XX' du pneumatique, un angle au moins égal à 80° et au plus égal à 100°. En outre, radialement à l'intérieur de la bande de roulement 3, le pneumatique 1 comprend une armature de protection 8 constituée par une couche de protection.

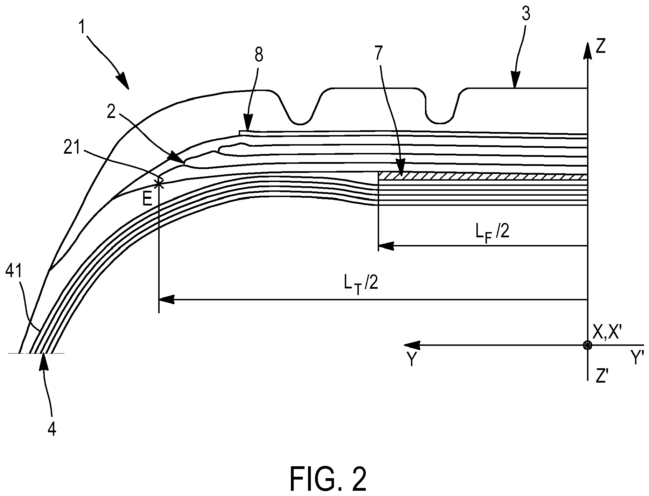

La figure 2 représente, dans un plan radial YZ passant par l'axe de rotation YY' du pneumatique, une demi-vue en coupe du sommet d'un pneumatique 1 pour avion selon l'invention, comprenant une armature de travail 2 radialement intérieure à une bande de roulement 3 et radialement extérieure à une armature de carcasse 4. Dans l'exemple présenté, l'armature de travail 2 comprend trois binappes de travail 21, le binappe de travail le plus radialement intérieur ayant la plus grande largeur axiale L_{T}, mesurée entre ses deux extrémités axiales E. Sur la figure 2, seule une demi-largeur L_{T}/2, entre une extrémité axiale E du binappe de travail 21 le plus radialement intérieur et le plan équatorial XZ, est représentée. Chaque binappe de travail 21 est constitué au moins en partie de deux couches de travail (211, 212) radialement superposées (voir sur la figure 3). Chaque couche de travail (211, 212) comprend des renforts hybrides, constitués d'une combinaison d'un polyamide aliphatique et d'un polyamide aromatique. L'armature de carcasse 4 comprend une superposition radiale de couches de carcasse 41. Chaque couche de carcasse 41 comprend des renforts hybrides, constitués d'une combinaison d'un polyamide aliphatique et d'un polyamide aromatique, et formant, avec la direction circonférentielle XX' du pneumatique, un angle au moins égal à 80° et au plus égal à 100°. En outre, le pneumatique 1 comprend une armature de frettage 7, comprenant une couche de frettage comprenant des renforts, enrobés dans un matériau élastomérique, formant, avec la direction circonférentielle (XX') du pneumatique, un angle au plus égal à 5°. La couche de frettage est radialement intérieure au binappe de travail le plus radialement intérieur 21 et a une largeur axiale L_{F} au plus égale à 0.8 fois la largeur axiale L_{T} du binappe de travail le plus radialement intérieur 21. Sur la figure 2, seule une demi-largeur axiale L_{F}/2, de la couche de frettage est représentée. Conformément à l'invention, le profil géométrique du binappe de travail le plus radialement intérieur 21, au niveau de son l'extrémité axiale E, est moins plaqué sur l'armature de carcasse que dans le cas du pneumatique de l'état de la technique présenté sur la figure 1. Enfin, radialement à l'intérieur de la bande de roulement 3, le pneumatique 1 comprend une armature de protection 8 constituée par une couche de protection.

La figure 3 est une vue détaillée en coupe de l'extrémité axiale de l'armature de travail 2 d'un pneumatique pour avion 1 selon l'invention, dans un plan radial YZ passant par l'axe de rotation YY' du pneumatique. Dans l'exemple présenté, l'armature de travail 2 comprend trois binappes de travail 21, dont les extrémités axiales respectives présentent des surépaisseurs. Chaque binappe de travail 21 est constitué de deux couches de travail (211, 212) radialement superposées en zone courante et de trois couches de travail en zone d'extrémité axiale. Chaque couche de travail (211, 212) est constituée par la juxtaposition axiale de bandelettes 9, chaque bandelette étant elle-même une juxtaposition axiale de renforts textile 5 enrobés dans un mélange élastomérique. Dans le cas présent les renforts textiles 5 sont des renforts hybrides constitués d'une combinaison d'un polyamide aliphatique et d'un polyamide aromatique. L'armature de carcasse 4 comprend une superposition radiale de couches de carcasse 41, chaque couche de carcasse 41 comprenant des renforts hybrides constitués d'une combinaison d'un polyamide aliphatique et d'un polyamide aromatique, et formant, avec la direction circonférentielle XX' du pneumatique, un angle au moins égal à 80° et au plus égal à 100°. Conformément à l'invention, la distance D entre une extrémité axiale E du binappe de travail le plus radialement intérieur 21 et sa projection orthogonale I sur la couche de carcasse la plus radialement extérieure 41 est au moins égale à 8 mm et la distance D' entre le point F du binappe de travail le plus radialement intérieur 21, axialement intérieur à l'extrémité axiale E à une distance L égale à 25 mm, et sa projection orthogonale J sur la couche de carcasse la plus radialement extérieure 41 est au plus égale à la distance D, et est telle que l'angle A est au moins égal à 12°. L'angle A est l'angle formé par la droite passant par l'extrémité axiale E du binappe de travail le plus radialement intérieur 21 et par le point F dudit binappe, positionné à 25 mm axialement à l'intérieur, et la droite passant par leurs projections orthogonales respectives I et J sur la couche de carcasse radialement la plus extérieure 41.

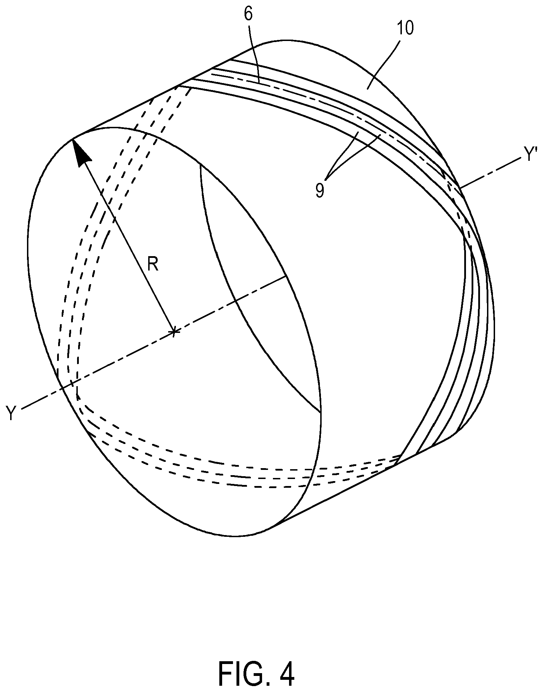

La figure 4 est une vue en perspective d'une bandelette 9, constitutive d'un binappe de travail d'un pneumatique pour avion, enroulée circonférentiellement en zigzag, selon une courbe périodique 6, sur une surface cylindrique de pose 10, de révolution autour de l'axe de rotation (YY') du pneumatique, ayant un rayon R.

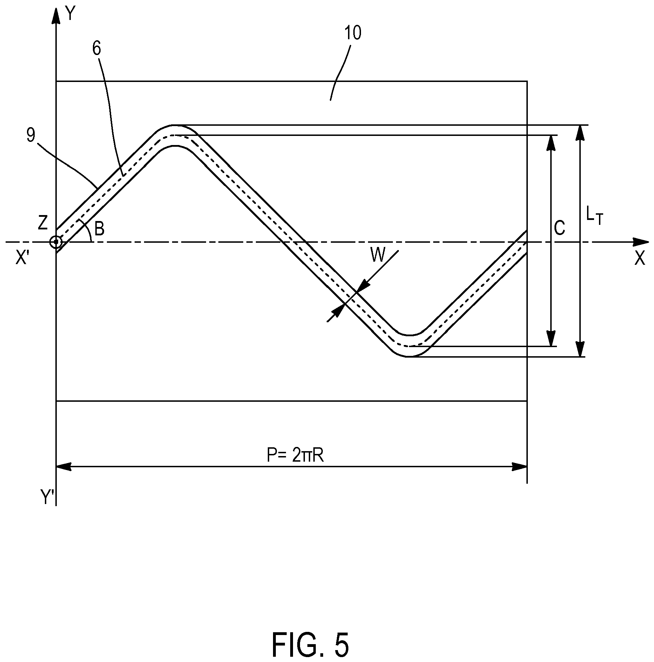

La figure 5 est une vue développée d'une bandelette 9, constitutive d'un binappe de travail d'un pneumatique selon l'invention, enroulée circonférentiellement en zigzag, selon une courbe périodique 6, après la pose d'une période. La bandelette 9 est posée sur une surface cylindrique 10 de circonférence 2 □R, représentée sous forme développée. La ligne moyenne de la bandelette 9 suit une courbe périodique 6, formant un angle B avec la direction circonférentielle XX'. La courbe périodique 6 a une période P égale à 2□R et une amplitude C, qui, majorée par la largeur W de la bandelette 9, définit la largeur L_{T}=C+W du binappe de travail.

Les inventeurs ont réalisé l'invention pour un pneumatique pour avion de dimension 46X17 R 20 dont l'armature de travail comprend 3 binappes de travail radialement superposés. Ils ont comparé un pneumatique de référence et un pneumatique selon l'invention, tous deux ayant une armature de travail comprenant 3 binappes de travail radialement superposés dont les renforts sont des renforts hybrides. Les deux pneumatiques, respectivement de référence et selon l'invention, diffèrent par le profil géométrique du binappe de travail le plus radialement intérieur, au niveau de son extrémité axiale, ledit profil étant dit relevé dans le cas du pneumatique selon l'invention.

Les caractéristiques géométriques des pneumatiques étudiés sont présentées dans le tableau 1 ci-dessous :

**Tableau 1**

| | Référence | Invention | Ecart |
|---|---|---|---|
| Distance D (mm) | 5 mm | 9 mm | 4 mm |
| Distance D' (mm) | 2 mm | 2.5 mm | 0.5 mm |
| Distance L (mm) | 25 mm | 25 mm | |
| A= asin[(D-D')/L] (°) | 6.9° | 15.1° | 8.2° |

Les distances D, D' et L sont mesurées sur une coupe radiale du pneumatique.

La distance D est mesurée, perpendiculairement à la couche de carcasse la plus radialement extérieure, entre le point le plus radialement intérieur de l'avant-dernier renfort du binappe de travail le plus radialement intérieur, et le point le plus radialement extérieur du premier renfort rencontré de la couche de carcasse radialement la plus extérieure.

La distance D' est mesurée, perpendiculairement à la couche de carcasse radialement la plus extérieure, entre le point le plus radialement intérieur du renfort du binappe de travail le plus radialement intérieur, axialement intérieur au renfort le plus axialement extérieur du binappe de travail le plus radialement intérieur à une distance de 25 mm, et le point le plus radialement extérieur du premier renfort rencontré de la couche de carcasse radialement la plus extérieure.

La distance L est mesurée comme le rayon égal à 25 mm du cercle ayant pour centre le renfort le plus axialement extérieur du binappe de travail le plus radialement intérieur.

Les performances respectives des pneumatiques de l'état de la technique, pris comme référence, et selon l'invention ont été mesurées selon trois critères : la température au voisinage de l'extrémité axiale du binappe de travail le plus radialement intérieur, l'effort de tension maximal dans les renforts en extrémité axiale du binappe de travail le plus radialement intérieur sur un tour de roue, et le nombre maximal de cycles réalisés sans dommage au cours d'un test TSO. Les deux premiers critères sont issus d'une simulation numérique par éléments finis, dans l'hypothèse d'un roulage stationnaire du pneumatique à une vitesse de 10km/h. Les nombres de cycles sans dommage ont été déterminés par des tests TSO.

Les critères de performances des pneumatiques étudiés sont présentés dans le tableau 2 ci-dessous :

**Tableau 2**

| | Référence | Invention | Ecart |
|---|---|---|---|
| Température en extrémité axiale en roulage stationnaire à 10km/h (°C) | 93°C | 88°C | 5°C |
| Effort de tension maximal en extrémité axiale, sur un tour de roue, en roulage stationnaire à 10km/h (daN) | 20 daN | 18 daN | 2 daN |
| Nombre de cycles sur test TSO | base 100 | 103 | 3 |

Cette invention est applicable non seulement à un pneumatique pour avion, mais aussi à tout pneumatique comprenant une armature de sommet avec au moins un binappe obtenu par un enroulement en zigzag d'une bandelette, tel que, par exemple et de façon non exhaustive, un pneumatique pour métro.

## Revendications

1. Pneumatique (1) pour avion comprenant:
- une armature de travail (2) radialement intérieure à une bande de roulement (3) et radialement extérieure à une armature de carcasse (4),
- l'armature de travail (2) comprenant au moins un binappe de travail (21), constitué au moins en partie de deux couches de travail (211, 212) radialement superposées,
- chaque couche de travail comprenant des renforts (5), enrobés dans un matériau élastomérique, positionnés circonférentiellement selon une courbe périodique (6) et formant, avec la direction circonférentielle (XX') du pneumatique et dans le plan équatorial du pneumatique (XZ), un angle (B) au moins égal à 8° et au plus égal à 30°,
- le binappe de travail le plus radialement intérieur (21) ayant la plus grande largeur axiale (L_{T}) et comprenant deux extrémités axiales (E), correspondant chacune au point le plus axialement extérieur et le plus radialement intérieur du binappe de travail (21),
- l'armature de carcasse (4) comprenant au moins une couche de carcasse (41) comprenant des renforts, enrobés dans un matériau élastomérique, formant, avec la direction circonférentielle (XX') du pneumatique, un angle au moins égal à 80° et au plus égal à 100°,
**caractérisé en ce que** la distance (D) entre une extrémité axiale (E) du binappe de travail le plus radialement intérieur (21) et sa projection orthogonale (I) sur la couche de carcasse la plus radialement extérieure (41) est au moins égale à 8 mm et **en ce que** la distance (D') entre le point (F) du binappe de travail le plus radialement intérieur (21), axialement intérieur à l'extrémité axiale (E) à une distance (L), mesurée comme le rayon du cercle ayant pour centre le renfort le plus axialement extérieur du binappe de travail le plus radialement intérieur, égale à 25 mm, et sa projection orthogonale (J) sur la couche de carcasse la plus radialement extérieure (41) est inférieure à la distance (D), entre ladite extrémité axiale (E) du binappe de travail le plus radialement intérieur (21) et sa projection orthogonale (I) sur la couche de carcasse la plus radialement extérieure (41), et est telle que l'angle (A), formé par la droite (EF) passant par l'extrémité axiale (E) du binappe et par ledit point (F) du binappe, positionné axialement à l'intérieur à ladite distance (L) égale à 25 mm, et la droite (IJ) passant par leurs projections orthogonales respectives (I, J) sur la couche de carcasse radialement la plus extérieure (41), est au moins égal à 12°.

2. Pneumatique (1) pour avion selon la revendication 1, **dans lequel** la distance (D) entre une extrémité axiale (E) du binappe de travail le plus radialement intérieur (21) et sa projection orthogonale (I) sur la couche de carcasse la plus radialement extérieure (41) est au plus égale à 16 mm.

3. Pneumatique (1) pour avion selon l'une des revendications 1 ou 2, **dans lequel** la distance (D') entre le point (F) du binappe de travail le plus radialement intérieur (21), axialement intérieur à l'extrémité axiale (E) à une distance (L) égale à 25 mm, et sa projection orthogonale (J) sur la couche de carcasse la plus radialement extérieure (41) est telle que l'angle (A), formé par la droite (EF) passant par l'extrémité axiale (E) du binappe et par le point (F) du binappe, positionné à 25 mm axialement à l'intérieur, et la droite (IJ) passant par leurs projections orthogonales respectives (I, J) sur la couche de carcasse radialement la plus extérieure (41), est au moins égal à 15°.

4. Pneumatique (1) pour avion selon l'une quelconque des revendications 1 à 3, **dans lequel** la distance (D') entre le point (F) du binappe de travail le plus radialement intérieur (21), axialement intérieur à l'extrémité axiale (E) à une distance (L) égale à 25 mm, et sa projection orthogonale (J) sur la couche de carcasse la plus radialement extérieure (41) est telle que l'angle (A), formé par la droite (EF) passant par l'extrémité axiale (E) du binappe et par le point (F) du binappe, positionné à 25 mm axialement à l'intérieur, et la droite (IJ) passant par leurs projections orthogonales respectives (I, J) sur la couche de carcasse radialement la plus extérieure (41), est au plus égal à 30°.

5. Pneumatique (1) pour avion selon l'une quelconque des revendications 1 à 4, **dans lequel** les renforts (5) des couches de travail de tout binappe de travail (21) sont constitués d'un matériau textile.

6. Pneumatique (1) pour avion selon l'une quelconque des revendications 1 à 5, **dans lequel** les renforts (5) des couches de travail d'au moins le binappe de travail le plus radialement intérieur (21) sont des renforts hybrides, constitués d'une combinaison d'un polyamide aliphatique et d'un polyamide aromatique.

7. Pneumatique (1) pour avion selon l'une quelconque des revendications 1 à 6, **dans lequel** le pneumatique (1) comprend une armature de frettage (7), comprenant au moins une couche de frettage comprenant des renforts, enrobés dans un matériau élastomérique, formant, avec la direction circonférentielle (XX') du pneumatique, un angle au plus égal à 5°, au moins une couche de frettage étant radialement intérieure au binappe de travail le plus radialement intérieur (21) et ayant une largeur axiale (L_{F}) au plus égale à 0.8 fois la largeur axiale (L_{T}) du binappe de travail le plus radialement intérieur (21).

8. Pneumatique (1) pour avion selon l'une quelconque des revendications 1 à 7, **dans lequel** le pneumatique (1) comprend une armature de protection (8) comprenant au moins une couche de protection.

9. Pneumatique (1) pour avion selon la revendication 8, **dans lequel** au moins une couche de protection comprend des renforts métalliques, enrobés dans un matériau élastomérique.

## Patentansprüche

1. Flugzeugreifen (1), welcher umfasst:
- eine Arbeitsbewehrung (2), die sich radial innerhalb eines Laufstreifens (3) und radial außerhalb einer Karkassenbewehrung (4) befindet,
- wobei die Arbeitsbewehrung (2) wenigstens eine Arbeitsdoppellage (21) umfasst, die wenigstens teilweise aus zwei radial übereinander angeordneten Arbeitslagen (211, 212) besteht,
- wobei jede Arbeitslage Festigkeitsträger (5) umfasst, die in ein elastomeres Material eingebettet sind, in Umfangsrichtung entlang einer periodischen Kurve (6) positioniert sind und mit der Umfangsrichtung (XX') des Reifens und in der Äquatorialebene des Reifens (XZ) einen Winkel (B) bilden, der mindestens gleich 8° und höchstens gleich 30° ist,
- wobei die radial innerste Arbeitsdoppellage (21) die größte axiale Breite (L_{T}) aufweist und zwei axiale Enden (E) umfasst, die jeweils dem axial äußersten und dem radial innersten Punkt der Arbeitsdoppellage (21) entsprechen,
- wobei die Karkassenbewehrung (4) wenigstens eine Karkassenlage (41) umfasst, die in ein elastomeres Material eingebettete Festigkeitsträger umfasst, die mit der Umfangsrichtung (XX') des Reifens einen Winkel bilden, der mindestens gleich 80° und höchstens gleich 100° ist,
**dadurch gekennzeichnet, dass** der Abstand (D) zwischen einem axialen Ende (E) der radial innersten Arbeitsdoppellage (21) und dessen orthogonaler Projektion (I) auf die radial äußerste Karkassenlage (41) wenigstens gleich 8 mm ist, und dadurch, dass der Abstand (D') zwischen dem Punkt (F) der radial innersten Arbeitsdoppellage (21), der sich in einem als Radius des Kreises mit dem axial äußersten Festigkeitsträger der radial innersten Arbeitsdoppellage als Mittelpunkt gemessenen Abstand (L), der gleich 25 mm ist, axial innerhalb des axialen Endes (E) befindet, und dessen orthogonaler Projektion (J) auf die radial äußerste Karkassenlage (41) kleiner als der Abstand (D) zwischen dem axialen Ende (E) der radial innersten Arbeitsdoppellage (21) und dessen orthogonaler Projektion (I) auf die radial äußerste Karkassenlage (41) ist und so beschaffen ist, dass der Winkel (A), der von der Geraden (EF), die durch das axiale Ende (E) der Doppellage und durch den Punkt (F) der Doppellage, der im Abstand (L), der gleich 25 mm ist, axial innerhalb davon positioniert ist, verläuft, und der Geraden (IJ), die durch deren jeweilige orthogonale Projektionen (I, J) auf die radial äußerste Karkassenlage (41) verläuft, gebildet wird, mindestens gleich 12° ist.

2. Flugzeugreifen (1) nach Anspruch 1, wobei der Abstand (D) zwischen einem axialen Ende (E) der radial innersten Arbeitsdoppellage (21) und dessen orthogonaler Projektion (I) auf die radial äußerste Karkassenlage (41) höchstens gleich 16 mm ist.

3. Flugzeugreifen (1) nach einem der Ansprüche 1 oder 2, wobei der Abstand (D') zwischen dem Punkt (F) der radial innersten Arbeitsdoppellage (21), der sich in einem Abstand (L), der gleich 25 mm ist, axial innerhalb des axialen Endes (E) befindet, und dessen orthogonaler Projektion (J) auf die radial äußerste Karkassenlage (41) so beschaffen ist, dass der Winkel (A), der von der Geraden (EF), die durch das axiale Ende (E) der Doppellage und durch den Punkt (F) der Doppellage, der 25 mm axial innerhalb davon positioniert ist, verläuft, und der Geraden (IJ), die durch deren jeweilige orthogonale Projektionen (I, J) auf die radial äußerste Karkassenlage (41) verläuft, gebildet wird, mindestens gleich 15° ist.

4. Flugzeugreifen (1) nach einem der Ansprüche 1 bis 3, wobei der Abstand (D') zwischen dem Punkt (F) der radial innersten Arbeitsdoppellage (21), der sich in einem Abstand (L), der gleich 25 mm ist, axial innerhalb des axialen Endes (E) befindet, und dessen orthogonaler Projektion (J) auf die radial äußerste Karkassenlage (41) so beschaffen ist, dass der Winkel (A), der von der Geraden (EF), die durch das axiale Ende (E) der Doppellage und durch den Punkt (F) der Doppellage, der 25 mm axial innerhalb davon positioniert ist, verläuft, und der Geraden (IJ), die durch deren jeweilige orthogonale Projektionen (I, J) auf die radial äußerste Karkassenlage (41) verläuft, gebildet wird, höchstens gleich 30° ist.

5. Flugzeugreifen (1) nach einem der Ansprüche 1 bis 4, wobei die Festigkeitsträger (5) der Arbeitslagen jeder Arbeitsdoppellage (21) aus einem textilen Material bestehen.

6. Flugzeugreifen (1) nach einem der Ansprüche 1 bis 5, wobei die Festigkeitsträger (5) der Arbeitslagen wenigstens der radial innersten Arbeitsdoppellage (21) hybride Festigkeitsträger sind, die aus einer Kombination eines aliphatischen Polyamids und eines aromatischen Polyamids bestehen.

7. Flugzeugreifen (1) nach einem der Ansprüche 1 bis 6, wobei der Reifen (1) eine Umhüllungsbewehrung (7) umfasst, die wenigstens eine Umhüllungslage umfasst, die in ein elastomeres Material eingebettete Festigkeitsträger umfasst, die mit der Umfangsrichtung (XX') des Reifens einen Winkel bilden, der höchstens gleich 5° ist, wobei sich wenigstens eine Umhüllungslage radial innerhalb der radial innersten Arbeitsdoppellage (21) befindet und eine axiale Breite (L_{F}) aufweist, die höchstens gleich dem 0,8-fachen der axialen Breite (L_{T}) der radial innersten Arbeitsdoppellage (21) ist.

8. Flugzeugreifen (1) nach einem der Ansprüche 1 bis 7, wobei der Reifen (1) eine Schutzbewehrung (8) umfasst, die wenigstens eine Schutzlage umfasst.

9. Flugzeugreifen (1) nach Anspruch 8, wobei wenigstens eine Schutzlage metallische Festigkeitsträger umfasst, die in ein elastomeres Material eingebettet sind.

## Claims

1. Aeroplane tyre (1) comprising:
- a working reinforcement (2) radially on the inside of a tread (3) and radially on the outside of a carcass reinforcement (4),
- the working reinforcement (2) comprising at least one working biply (21) consisting at least in part of two radially superposed working layers (211, 212),
- each working layer comprising reinforcers (5) coated in an elastomeric material, positioned circumferentially along a periodic curve (6) and forming, with the circumferential direction (XX') of the tyre and in the equatorial plane of the tyre (XZ), an angle (B) at least equal to 8° and at most equal to 30°,
- the radially innermost working biply (21) having the greatest axial width (L_{T}) and comprising two axial ends (E) each one corresponding to the axially outermost and radially innermost point of the working biply (21),
- the carcass reinforcement (4) comprising at least one carcass layer (41) comprising reinforcers which are coated in an elastomeric material, forming, with the circumferential direction (XX') of the tyre, an angle at least equal to 80° and at most equal to 100°,
**characterized in that** the distance (D) between an axial end (E) of the radially innermost working biply (21) and its orthogonal projection (I) onto the radially outermost carcass layer (41) is at least equal to 8 mm **and in that** the distance (D') between the point (F) on the radially innermost working biply (21), axially on the inside of the axial end (E) at a distance (L) measured as being the radius of the circle which has, as its centre, the axially outermost reinforcer of the radially innermost working biply equal to 25 mm, and its orthogonal projection (J) onto the radially outermost carcass layer (41) is less than the distance (D) between the said axial end (E) of the radially innermost working biply (21) and its orthogonal projection (I) onto the radially outermost carcass layer (41) and is such that the angle (A) formed by the straight line (EF) passing through the axial end (E) of the biply and through the said point (F) of the biply, positioned axially on the inside at the said distance (L) equal to 25 mm, and the straight line (IJ) passing through their respective orthogonal projections (I, J) onto the radially outermost carcass layer (41) is at least equal to 12°.

2. Aeroplane tyre (1) according to Claim 1, **in which** the distance (D) between an axial end (E) of the radially innermost working biply (21) and its orthogonal projection (I) onto the radially outermost carcass layer (41) is at most equal to 16 mm.

3. Aeroplane tyre (1) according to either of Claims 1 and 2, **in which** the distance (D') between the point (F) on the radially innermost working biply (21), axially on the inside of the axial end (E) at a distance (L) equal to 25 mm, and its orthogonal projection (J) onto the radially outermost carcass layer (41) is such that the angle (A) formed by the straight line (EF) passing through the axial end (E) of the biply and through the point (F) of the biply, positioned 25 mm axially on the inside, and the straight line (IJ) passing through their respective orthogonal projections (I, J) onto the radially outermost carcass layer (41) is at least equal to 15°.

4. Aeroplane tyre (1) according to any one of Claims 1 to 3, in **which** the distance (D') between the point (F) on the radially innermost working biply (21), axially on the inside of the axial end (E) at a distance (L) equal to 25 mm, and its orthogonal projection (J) onto the radially outermost carcass layer (41) is such that the angle (A) formed by the straight line (EF) passing through the axial end (E) of the biply and through the point (F) of the biply, positioned 25 mm axially on the inside, and the straight line (IJ) passing through their respective orthogonal projections (I, J) onto the radially outermost carcass layer (41) is at most equal to 30°.

5. Aeroplane tyre (1) according to any one of Claims 1 to 4, **in which** the reinforcers (5) of the working layers of any working biply (21) are made of a textile material.

6. Aeroplane tyre (1) according to any one of Claims 1 to 5, **in which** the reinforcers (5) of the working layers of at least the radially innermost working biply (21) are hybrid reinforcers made up of a combination of an aliphatic polyamide and an aromatic polyamide.

7. Aeroplane tyre (1) according to any one of Claims 1 to 6, **in which** the tyre (1) comprises a hoop reinforcement (7) comprising at least one hooping layer comprising reinforcers which are coated in an elastomeric material, forming, with the circumferential direction (XX') of the tyre, an angle at most equal to 5°, at least one hooping layer being radially on the inside of the radially innermost working biply (21) and having an axial width (L_{F}) at most equal to 0.8 times the axial width (L_{T}) of the radially innermost working biply (21).

8. Aeroplane tyre (1) according to any one of Claims 1 to 7, **in which** the tyre (1) comprises a protective reinforcement (8) comprising at least one protective layer.

9. Aeroplane tyre (1) according to Claim 8, **in which** at least one protective layer comprises metal reinforcers coated in an elastomeric material.
